# EUROPÄISCHE PATENTSCHRIFT

(11) **EP 0 601 422 B1**
(45) Veröffentlichungstag und Bekanntmachung des Hinweises auf die Patenterteilung: **02.04.1997**
(21) Anmeldenummer: 93119141.5
(22) Anmeldetag: 27.11.1993
(51) Int. Cl.: B07C 5/34, B07C 5/342

(54) **Verfahren zum Identifizieren von Objekten und Vorrichtung zur Durchführung des Verfahrens**
Method and apparatus for identifying objects
Procédé et appareil pour identifier des objets

(30) Priorität: 08.12.1992 DE 4241250
(43) Veröffentlichungstag der Anmeldung: 15.06.1994
(73) Patentinhaber: RWE Entsorgung Aktiengesellschaft, 45141 Essen (DE)
(72) Erfinder: Kaiser, Dieter, D-44357 Dortmund (DE); Wintrich, Franz, D-45309 Essen (DE)

(56) Entgegenhaltungen:
- EP-A- 0 104 369
- DE-A- 3 520 486
- GB-A- 2 246 230
- US-A- 3 747 755
- US-A- 4 220 972
- US-A- 4 394 683
- US-A- 4 624 367
- US-A- 4 687 107
- TM/TECHNISCHES MESSEN, Bd.55, Nr.12, 1. Dezember 1988, MÜNCHEN Seiten 504 - 510, XP001552 TATARI ET AL. 'VERFAHREN U.GERÄTE ZUR SCHNELLEN PRÜFUNG,USW.'
- TRANSACTIONS OF THE INSTITUTE OF MEASUREMENT AND CONTROL, Bd.10, Nr.5, 1. Dezember 1988, LONDON Seiten 265 - 272, XP098654 WEST ET AL. 'IMAGE PROCESSING AND UNDERSTANDING,USW.'

## Beschreibung

Die vorliegende Erfindung betrifft ein Verfahren zum Identifizieren von Objekten aus Abfallgemischen nach dem Oberbegriff des Anspruchs 1. Die Erfindung betrifft ferner eine Vorrichtung zur Durchführung des Verfahrens.

Der Erkennung von Objekten kommt in vielen Bereichen großer Bedeutung zu. Dies gilt vor allem für eine Reihe technischer Bereiche. So kann es beispielsweise bei automatischer Bearbeitung von Gegenständen erforderlich sein, einen Gegenstand zunächst zu erkennen und dann einer Weiterverarbeitungsstufe zuzuführen. Von besonders großer Bedeutung ist die exakte Erkennung von Materialien bei Sortiervorgängen. Hierbei werden nach dem Stand der Technik Geräte verwendet, welche von einem Objekt ankommende elektromagnetische Wellen registrieren, mit gespeicherten Daten vergleichen und anschließend Signale aussenden, die z. B. eine Sortiervorrichtung in Gang setzen.

Bei diesen bekannten Methoden werden mit Hilfe der von den Objekten ankommenden elektromagnetischen Wellen Abbildungen gegenständlicher Objekte erzeugt und diese mit gespeicherten Abbildungen verglichen.

Die EP 0 104 369 A2 offenbart eine Einrichtung zum optischen Erkennen von Flächenmustern auf einem insbesondere bewegten Objekt. Es wird der optische Grauwert des Flächenmusters mittels eines optoelektronischen Fotodiodenzeilensensors erfaßt, der ein charakteristisches Signal abgibt, das in einer Auswertvorrichtung ausgewertet wird und mit gespeicherten Signalen verglichen wird.

Die U.S.-Schrift -A- 374 7755 offenbart ein Verfahren nach dem Oberbegriff des Anspruchs 1.

Die U.S.-Schrift 4,687,107 offenbart einen Apparat zum Sortieren von Objekten. Es werden Durchmesser, Länge, Form, Gewicht, Farbe, Dichte und Oberflächenqualität durch entsprechende Maßnahmen ermittelt.

In der DE-OS 41 25 045 wird ein Verfahren zum Sortieren von Abfallgemischen offenbart, durch Bestrahlen der Abfallobjekte mit elektromagnetischen und / oder akustischen Wellen, Aufnahme der von den bestrahlten Abfallobjekten ankommenden Wellen in einer Signalverarbeitungsvorrichtung zur Identifizierung der Abfallobjekte und Weiterleiten von Signalen aus der Signalverarbeitungsvorrichtung zu einer Sortiervorrichtung, die das identifizierte Abfallobjekt aussortiert. Die Signalverarbeitungsvorrichtung erfaßt Merkmale, wie äußere Form des Objekts, wie z. B. Flaschen-, Becher-, Tubenformen, kubische und andere Formen sowie Schriftzüge, Produktnamen, Firmen- bzw. Herstellernamen, Warenzeichen und Farben.

Die bekannten Verfahren benötigen demgemäß zur Erkennung von Objekten und zum Ergreifen bestimmter Maßnahmen eine möglichst vollständige Datenbank, die Umformung ankommender elektromagnetischer Wellen in bestimmte Abbildungen und Vergleich der Abbildungen mit den in der Datenbank möglichst vollständig gespeicherten Vergleichsdaten. Nach erfolgter Erkennung wird dann ein Signal ausgelöst, welches z. B. eine Sortiervorrichtung in Betrieb setzt, die den erkannten Gegenstand aussortiert.

Der Anmelderin ist es nunmehr gelungen, ein wesentlich besseres Identifizierungsverfahren für Objekte aus Abfallgemischen zu entwickeln, ohne daß ein Vergleich mit umfangreichen gespeicherten Daten erforderlich ist, durch Bestrahlung der Objekte mit elektromagnetischen Wellen im UV- bis IR-Bereich, wobei die vom Objekt ankommenden Wellen auf wenigstens einen mit Fotodioden ausgestatteten Chip auftreffen, welcher die aufgenommene Fotoanregung einer spektralen Zerlegung zuführt, Verarbeitung von Signalen aus der spektralen Zerlegung der vom Objekt ankommenden Wellen durch eine elektronische Signalverarbeitungsanlage, wobei das spektrale Licht des Objektes mit in einem Datenspeicher gespeicherten Daten verglichen wird und Abgabe von Signalen aus der elektronischen Signalverarbeitungsanlage und wobei nach Erkennung des Objekts durch wenigstens ein Signal als Folgeschritt eine Sortiervorrichtung in Gang gesetzt wird, die das erkannte Objekt aussortiert, dadurch gekennzeichnet, daß grauem Licht aus der spektralen Zerlegung entsprechende Ausgangssignale einem Kantenfilter und/oder einem Texturfilter zugeführt werden, daß die durch das Kantenfilter erhaltene Objektkontur und/oder die durch das Texturfilter erhaltene Oberflächenstruktur des Objektes mit in dem Datenspeicher gespeicherten Daten verglichen werden.

Das erfindungsgemäße Verfahren ist sehr gut dazu geeignet, Objekte aus einem Objektgemisch zu identifizieren, wobei die Identifizierung dadurch begünstigt wird, daß die Objekte zunächst aus dem Objektgemisch vereinzelt werden. Nach Identifizierung des Objekts können Folgeschritte in Gang gesetzt werden. Ein sehr wichtiger Folgeschritt ist das Ingangsetzen einer Sortiervorrichtung, die das erkannte Objekt aussortiert.

Die Objektidentifizierung erfolgt in der Weise, daß man Objekte zunächst mit elektromagnetischen Wellen im Ultraviolettbereich, im Bereich des sichtbaren Lichtes oder im Infrarotbereich bestrahlt. Die vom Objekt ankommenden Wellen, z. B. durch Reflektion am Objekt oder nach Durchdringen oder teilweisem Durchdringen des Objekts bzw. nach Wiederausstrahlung von elektromagnetischen Wellen treffen auf wenigstens ein mit Fotodioden ausgestattetes Chip auf. Es kann sich erfindungsgemäß jedoch auch um eine Vielzahl von Chips handeln. Die von dem Chip aufgenommene Fotoanregung wird einer spektralen Zerlegung zugeführt, wobei das graue Licht einem Kantenfilter oder einem Texturfilter zugeführt wird. Die spektrale Zerlegung erfolgt hierbei bevorzugt elektronisch. Die auf diese Weise erhaltenen Merkmale, nämlich die durch das Kantenfilter erhaltene Objektkontur und die durch das Texturfilter erhaltene Oberflächenstruktur des Objekts können nunmehr mit entsprechenden in einem Datenspeicher gespeicherten Daten verglichen werden. Nach Identifizierung des Objekts kann die elektronische Signalverarbeitung wenigstens ein spezifisches Signal aussenden, um bestimmte Folgeschritte in Gang zu setzen, wobei die Aussortierung eines identifizierten Objekts ein besonders wichtiger Folgeschritt ist.

Grundsätzlich können auch weitere Verfahrens- und Vorrichtungsmerkmale, wie z. B. Phasenverschiebung und andere zur Identifizierung von Objekten geeignete Merkmale zusätzlich zu den genannten Merkmalen verwendet werden.

Erfindungsgemäßes Verfahren und erfindungsgemäße Vorrichtung sind von besonderer Bedeutung bei der Identifizierung von Objekten aus Abfallgemischen und der Aussortierung solcher Objekte. Es ist bekannt, daß das Aussortieren sortenreiner Kunststoffe aus Kunststoffabfallgemischen von besonderer Bedeutung im Hinblick auf die Wiederverwendung von Kunststoffabfällen ist.

Die Aussortierung kann hierbei nach dem Stand der Technik auf unterschiedliche Art erfolgen, beispielsweise pneumatisch, hydraulisch, mechanisch oder auf andere Weise. Die Identifizierung und Aussortierung von Objekten wird insbesondere dadurch verbessert, daß man vor Anwendung des erfindungsgemäßen Verfahrens die Objekte aus einem Objektgemisch bzw. Abfallgemisch vereinzelt, also z. B. auf einem Förderband voneinander trennt.

Man arbeitet erfindungsgemäß bevorzugt mit sichtbarem Licht. Jedoch auch UV- und IR-Licht sind erfindungsgemäß mit sehr guten Ergebnissen einsetzbar.

Das erfindungsgemäße Verfahren erlaubt es, ohne Anfertigung von Abbildungen von Objekten und deren Speicherung in einer Datenbank, Kunststoffe zuverlässig zu identifizieren unter Zugrundelegen der erfindungsgemäßen Merkmale. Auf diese Weise lassen sich sortenreine Kunststoffe zurückgewinnen, die einer entsprechenden hochwertigen Wiederverwertung zugeführt werden können.

Die vorliegende Erfindung betrifft auch eine Vorrichtung zur Durchführung des Verfahrens nach Anspruch 1, die eine Strahlenquelle für elektromagnetische Wellen aus dem UV- bis IR-Bereich, eine elektronische Signalverarbeitungsanlage mit einem Datenspeicher, wenigstens einen mit Fotodioden ausgestatteten Chip zur Aufnahme elektromagnetischer Wellen, die von einem bestrahlten Objekt ankommen und eine Vorrichtung zur spektralen Zerlegung von Licht enthält, wobei die Signalverarbeitungsanlage das spektrale Licht mit gespeicherten Daten vergleicht, wobei grauem Licht aus der spektralen Zerlegung entsprechende Ausgangssignale erzeugt werden, wobei die Signalverarbeitungsanlage einen Kantenfilter und/oder einen Texturfilter zur Aufnahme und Verarbeitung der Ausgangssignale umfaßt, die durch das Kantenfilter erhaltene Objektkontur und/oder die durch die Texturfilter erhaltene Oberflächenstruktur mit gespeicherten Daten vergleicht und nach Objektidentifizierung in der Lage ist, durch wenigstens ein Signal als Folgeschritt eine Sortiervorrichtung in Gang zu setzen.

Bevorzugt ist, wie bereits oben ausgeführt, der Vorrichtung eine Vereinzelungsvorrichtung zum Vereinzeln der Objekte aus einem Objektgemisch vorgeschaltet.

## Patentansprüche

1. Verfahren zum Identifizieren von Objekten aus Abfallgemischen durch Bestrahlung derselben mit elektromagnetischen Wellen im UV- bis IR-Bereich , wobei die vom Objekt ankommenden Wellen auf wenigstens einen mit Fotodioden ausgestatteten Chip auftreffen, welcher die aufgenommene Fotoanregung einer spektralen Zerlegung zuführt, Verarbeitung von Signalen aus der spektralen Zerlegung der vom Objekt ankommenden Wellen durch eine elektronische Signalverarbeitungsanlage, wobei das spektrale Licht des Objektes mit in einem Datenspeicher gespeicherten Daten verglichen wird und Abgabe von Signalen aus der elektronischen Signalverarbeitungsanlage, und wobei nach Erkennung des Objektes durch wenigstens ein Signal als Folgeschritt eine Sortiervorrichtung in Gang gesetz wird, die das erkannte Objekt aussortiert dadurch gekennzeichnet, das grauem Licht aus der spektralen Zerlegung entsprechende Ausgangssignale einem Kantenfilter und/oder einem Texturfilter zugeführt werden, daß die durch das Kantenfilter erhaltene Objektkontur und/oder die durch das Texturfilter erhaltene Oberflächenstruktur des Objektes mit in dem Datenspeicher gespeicherten Daten verglichen werden.

2. Verfahren nach Anspruch 1, dadurch gekennzeichnet, daß Objekte aus einem Abfallgemisch identifiziert werden.

3. Verfahren nach Anspruch 1 oder 2, dadurch gekennzeichnet, daß die im Objektgemisch vorhandenen Objekte vereinzelt werden.

4. Vorrichtung zur Durchführung des Verfahrens nach Anspruch 1, die eine Strahlenquelle für elektromagnetische Wellen aus dem UV- bis IR-Bereich, eine elektronische Signalverarbeitungsanlage mit einem Datenspeicher, wenigstens einen mit Fotodioden ausgestatteten Chip zur Aufnahme elektromagnetischer Wellen, die von einem bestrahlten Objekt ankommen und eine Vorrichtung zur spektralen Zerlegung von Licht enthält, wobei die Signalverarbeitungsanlage das spektrale Licht mit gespeicherten Daten vergleicht, wobei grauem Licht aus der spektralen Zerlegung entsprechende Aussgangssignale erzeugt werden, wobei die Signalverarbeitungsanlage einen Kantenfilter und/oder einen Texturfilter zur Aufnahme und Verarbeitung der Ausgangssignale umfaßt, die durch das Kantenfilter erhaltene Objektkontur und/oder die durch die Texturfilter erhaltene Oberflächenstruktur mit gespeicherten Daten vergleicht und nach Objektindentifizierung in der Lage ist, durch wenigstens ein Signal als Folgeschritt eine Sortiervorrichtung in Gang zu setzen.

5. Vorrichtung nach Anspruch 4, dadurch gekennzeichnet, daß der Vorrichtung eine Vereinzelungsvorrichtung zur Vereinzelung der Objekte aus dem Objektgemisch vorgeschaltet ist.

## Claims

1. Process for the identification of objects in waste mixtures by radiating them with electromagnetic waves in UV to IR ranges, whereby the waves arriving from the object strike at least one chip equipped with photodiodes, which feeds the taken photoexitation to a spectral decomposition, processing of signals from the spectral decomposition of the waves arriving from the object by an electronic signal processing unit, whereby the spectral light of the object is compared with data memorized in a data memory and output of signals from the electronic signal processing unit, whereby after identification of the objects by at least one signal a sorting device is put in operation, which separates the object characterized in that output signals corresponding to gray light from the spectral decomposition are fed to a cut-off filter and/or a texture filter, that the object contour provided by the cut-off filter and/or the surface structure of the object obtained by the texture filter are compared with data memorized in the data memory.

2. Process according to claim 1, characterized in that objects of a waste mixture are identified.

3. Process according to claim 1 or 2, characterized in that the objects in the object mixture are isolated.

4. Device for carrying out the process according to claim 1, which contains a radiation source for electromagnetic waves from UV- to IR-ranges, an electronic signal processing unit with a data memory, at least one chip equipped with photodiodes to receive electromagnetic waves, which arrive from a radiated object and a means for spectral light decomposition, whereby the signal processing unit compares the spectral light with memorized data, whereby output signals corresponding to gray light from the spectral decomposition are produced and whereby the signal processing unit embraces a cut-off filter and/or a texture filter for receiving and processing the output signals, and compares the object contour received from the cutt-off filter and the surface structure received from the texture filter with memorized data and is in a position, after identification of the object to put subsequently a sorting device in operation initiated by at least one signal.

5. Device according to claim 4, characterized in that a separating means to separate objects from the object mixture is connected in series with the device.

## Revendications

1. Procédé pour l'identification des objets d' un mélanges des déchets par irradiation du mélange avec de la radiation eléctromagnétique des bandes du UV à IR, à l' occasion de quoi la radiation arrivante de l' objet recontre sur au moins un chip équipé avec des photodiodes quel amène la photoexitation absorbée à une dispersion spectrale, traitement des signals de la dispersion spectrale de la radiation arrivant de l' objet par une installation électronique pour le traitment des signals, à l' occasion de quoi la lumière spectrale de l' objet est comparée avec des données mémorisées dans une mémoire d' informations et émission des signals de l' installation électronique pour le traitment des signals, à l' occasion de quoi, aprés la reconnaissance des objets par au moins un signal, par conséquence une installation de triage est mise en marche, quelle trie l' objet reconnu, caractérisé en ce que des signals de sortie correspondant à de la lumière grise sont amenés vers un filtre debout et / ou un filtre texture, en ce que le contour obtenu par le filtre debout et / on le surface figurée obtenu par le filtre texture des objets sont comparés avec des données mémorisées dans le mémoire d' informations.

2. Procédé selon la revendication 1, caractérisé en ce que des objets d' un mélange des déchets sont identifiés.

3. Procédé selon l' une de revendications 1 et 2, caractérisé en ce que les objets présents dans le mélange des déchets, sont dépariés.

4. Dispositif pour l' exécution du procédé selon la revendication 1, quel contient une source pour de la radiation electromagnétiquee des bandes du UV à IR, une installation électronique pour le traitment des signals avec une mémoire d' informations, au moins un chip équipé avec des photodiodes pour la réception de la radiation électromagnétiquee, quelle arrive d' un objet exposé à une radiation et un dispositif pour la dispersion spectrale de la lumière, à l' occasion de quoi l' installation électronique pour le traitment des signals compare la lumière spectrale avec des données mémorisées, à l' occasion de quoi signals de sortie sont produis correspondant à de la lumière grise de la dispersion spectrale, à l' occasion de quoi l' installation électronique pour le traitement des signals enceint un filtre debout et / ou un filtre texture pour réception et traitment des signals de sortie, quel compare les contours de l' objet obtenus du filtre debout et le surface figurée obtenu du filtre texture avec des données mémorisées et quel est après en état de mettre en marche une installation de triage par au moins un signal.

5. Dispositif selon la revendication 4, caractérisé en ce que un appareil pour le démariage des objets du mélange des objets est disposé en tête du dispositif.
